# EUROPÄISCHE PATENTSCHRIFT

(11) **EP 3 835 897 B1**
(45) Veröffentlichungstag und Bekanntmachung des Hinweises auf die Patenterteilung: **26.04.2023**
(21) Anmeldenummer: 20207414.2
(22) Anmeldetag: 13.11.2020
(51) Int. Cl.: G05B 19/05, F23N 5/18, F23N 5/24

(54) **GASHEIZGERÄTESTEUERUNG FÜR EIN GASHEIZGERÄT**
GAS HEATER CONTROL FOR A GAS HEATER
COMMANDE D'APPAREIL CHAUFFANT À GAZ POUR UN APPAREIL CHAUFFANT À GAZ

(30) Priorität: 12.12.2019 DE 102019134099
(43) Veröffentlichungstag der Anmeldung: 16.06.2021
(73) Patentinhaber: ebm-papst Landshut GmbH, 84030 Landshut (DE)
(72) Erfinder: KLINK, Hans-Joachim, 84184 Tiefenbach (DE); WALD, Stephan, 48341 Altenberge (DE); KLEINE, Volker, 49143 Bissendorf (DE)
(74) Vertreter: Staeger & Sperling Partnerschaftsgesellschaft mbB

(56) Entgegenhaltungen:
- DE-A1- 3 923 773
- DE-A1-102008 038 949
- US-A1- 2016 091 903

## Beschreibung

Die Erfindung betrifft eine Gasheizgerätesteuerung für ein Gasheizgerät.

In aktuellen Gasheizgeräten werden viele Funktionen elektronisch ausgeführt, von denen einige sicherheitstechnisch unkritisch sind, andere zwingend fehlersicher ausgeführt sein müssen. Häufig werden dabei aus Kostengründen alle elektronischen Funktionen in einer Steuerung integriert. Es werden somit sicherheitsrelevante und nicht-sicherheitsrelevante Funktionen gemischt. Bei einer Änderung im Zulassungsprozess sind dann jedoch alle Komponenten der Steuerung sicherheitstechnisch zu prüfen. Das ist vergleichsweise aufwändig und zwingt auch die nicht-sicherheitsrelevante Komponenten zur Einhaltung der strengeren Anforderungen an die sicherheitsrelevanten Funktionen.

Zusätzlich entstehen Nachteile durch hohe Störausstrahlung bei der Kommutierung des von der Elektronik entfernt montierten Gebläsemotors des Verbrennungsmischgebläses des Gasheizgeräts. Ein weiterer Nachteil ist, dass die sonst über ein Lüfterrad gekühlten Kommutierungstransistoren der Kommutierungselektronik dann keine Kühlung mehr erfahren.

Druckschriftlicher Stand der Technik im vorliegenden technischen Gebiet ist in den Dokumenten DE 10 2008 038 949 A1, US 2016/091903 A1 und DE 39 23 773 A1 offenbart.

Der Erfindung liegt deshalb die Aufgabe zugrunde, eine kostengünstige und flexible Gasheizgerätesteuerung für ein Gasheizgerät bereitzustellen, welche die vorstehenden Nachteile überwindet.

Diese Aufgabe wird durch die Merkmalskombination gemäß Patentanspruch 1 gelöst.

Erfindungsgemäß wird eine Gasheizgerätesteuerung mit einer modular aufgebauten Elektronik für ein Gasheizgerät mit einem Verbrennungsluftgebläse vorgeschlagen. Die Gasheizgerätesteuerung umfasst mindestens ein erstes und ein getrenntes zweites Modul. Die Elektronik weist zumindest eine Kommutierungselektronik für das Verbrennungsluftgebläse, eine Regelungselektronik zur Regelung des Verbrennungsluftgebläses, sicherheitsrelevante Komponenten zur Verarbeitung sicherheitsrelevanter Signale des Gasheizgeräts und nicht-sicherheitsrelevante Komponenten zur Verarbeitung nicht-sicherheitsrelevanter Signale des Gasheizgeräts auf. Erfindungsgemäß ist vorgesehen, dass die Kommutierungselektronik und die sicherheitsrelevanten Komponenten auf dem ersten Modul, die Regelungselektronik und die nicht-sicherheitsrelevanten Komponenten auf dem getrennten zweiten Modul angeordnet sind.

Der modulare Aufbau mit zwei getrennten Modulen zur Anordnung der unterschiedlichen Elektronik in dieser Weise bietet den Vorteil, dass die bereits für das Gasheizgerät vorzusehenden Komponenten für Kommutierung und Regelung jeweils um sicherheitsrelevante Komponenten für sicherheitsrelevante Funktionen und nicht-sicherheitsrelevante Komponenten für nicht-sicherheitsrelevante Funktionen so ergänzt werden können, dass für die Gasheizgerätehersteller eine möglichst große Flexibilität bei der Zusammenstellung der Elektronik zur Kommutierung und Regelung besteht, ohne die Kosten zu erhöhen.

Die bereits für jedes Verbrennungsluftgebläse vorzusehende Kommutierungselektronik wird im ersten Modul um die sicherheitsrelevanten Komponenten zur Verarbeitung sicherheitsrelevanter Signale des Gasheizgeräts ergänzt.

In einer vorteilhaften Ausgestaltung der Gasheizgerätesteuerung wird dies dadurch erzielt, dass das erste Modul einen Mikrocontroller aufweist, der sowohl die Kommutierungselektronik als auch die Verarbeitung der sicherheitsrelevanten Signale des Gasheizgeräts realisiert.

Die Regelungselektronik für die Regelung der Drehzahl des Verbrennungsluftgebläses wird mit den nicht-sicherheitsrelevanten Komponenten zur Verarbeitung nicht-sicherheitsrelevanter Signale des Gasheizgeräts zusammengefasst.

Ferner ist eine Ausführungsvariante der Gasheizgerätesteuerung günstig, bei der das erste Modul in dem Verbrennungsluftgebläse integriert ist. Eine vorteilhafte Lösung sieht dabei vor, dass das erste Modul mit der Kommutierungselektronik direkt am Motor des Verbrennungsluftgebläses angeschlossen wird, um die Störausstrahlung möglichst gering zu halten. Ferner ist günstig, dass die elektronischen Bauteile zur Kommutierung des Motors des Verbrennungsluftgebläses dabei durch ein am Motor angebrachtes Kühl-Lüfterrad gekühlt werden können.

Eine weitere vorteilhafte Ausgestaltung der Gasheizgerätesteuerung sieht vor, dass das erste Modul schwingungsgedämpft in dem Verbrennungsluftgebläse gelagert ist. Die elektronischen sicherheitsrelevanten Komponenten zur Verarbeitung sicherheitsrelevanter Signale des Gasheizgeräts sind gewichtsmäßig leicht und können zusammen mit der Kommutierungselektronik schwingungsgedämpft, beispielsweise über Gummidämpfer gelagert werden. Bei einer Anordnung am Verbrennungsluftgebläse werden durch das Laufrad Schwingungen erzeugt, welche durch die schwingungsgedämpfte Lagerung von der Elektronik des ersten Moduls entkoppelt werden.

Die Gasheizgerätesteuerung ist in einer Ausführung ferner dadurch gekennzeichnet, dass das erste und das zweite Modul über eine bidirektionale Kommunikationsschnittstelle miteinander verbunden sind. Hierdurch können die Elektroniksignale zwischen den beiden Modulen und insbesondere die sicherheitsrelevanten Signale und die nicht-sicherheitsrelevanten Signale ausgetauscht werden. Zudem erfolgt auch die Regelung des Verbrennungsluftgebläses durch die Regelungselektronik über die Kommunikationsschnittstelle.

Bei dem modularen Aufbau der Gasheizgerätesteuerung ist in einer Weiterbildung zudem realisiert, dass eine Stromversorgung für das Verbrennungsluftgebläse, die Kommutierungselektronik und die Regelungselektronik ausschließlich auf dem zweiten Modul vorgesehen ist. Es kann mithin eine einzige Stromversorgung für die Elektronik beider Module und das Verbrennungsluftgebläse verwendet werden. Die Stromversorgung ist vergleichsweise gewichtsmäßig schwer und wird auf dem zweiten Modul verbaut, das vorzugsweise nicht integraler Teil des Verbrennungsluftgebläses und nicht schwingungsgedämpft ist.

Zudem ist günstig, dass mindestens ein Netzfilter ausschließlich auf dem zweiten Modul vorgesehen ist. Ein einziger Netzfilter reicht für eine Stromversorgung aus. Auch dieser ist vergleichsweise gewichtsmäßig schwer und wird deshalb auf dem zweiten Modul verbaut, das vorzugsweise nicht integraler Teil des Verbrennungsluftgebläses und nicht schwingungsgedämpft ist.

Bezüglich der elektromechanischen Konstruktion sieht eine vorteilhafte Ausführung der Gasheizgerätesteuerung vor, dass das erste und das zweite Modul jeweils durch eine eigene Platine gebildet sind.

In einem Ausführungsbeispiel der Gasheizgerätesteuerung sind das Verbrennungsluftgebläse und die Elektronik vorzugsweise mit Kleinspannung, beispielsweise bei 24V betreibbar. Hierdurch können auf den Platinen geringe Leiterbahnabstände realisiert und mithin kleinere Platinen verwendet werden. Das reduziert die Kosten. Zudem haben äußere Bedingungen wie starker Staub oder hohe Feuchtigkeit am Einbauort geringeren Einfluss.

Bei der Gasheizgerätesteuerung betreffen die sicherheitsrelevanten Komponenten zur Verarbeitung sicherheitsrelevanter Signale des Gasheizgeräts zumindest eine Gasventilsteuerung, eine Flammenüberwachung eines Brenners des Gasheizgeräts, eine Temperaturüberwachung und/oder eine Kontrolle der Verbrennungsluft. Die Aufzählung ist nicht abschließend. Es können beispielsweise durch gesetzliche Vorlagen auch weitere Komponenten sicherheitsrelevant werden, die vorliegend nicht genannt sind.

Die nicht-sicherheitsrelevanten Komponenten zur Verarbeitung nicht-sicherheitsrelevanter Signale des Gasheizgeräts betreffen zumindest eine Temperaturregelung, eine Steuerung eines Wasserventils, eine Steuerung einer Pumpe und/oder eine Anzeige- und Bedienungsvorrichtung. Auch diese Aufzählung ist nicht abschließend. Es können beispielsweise durch zusätzliche Absicherungsmaßnahmen sicherheitsrelevante Komponenten abgesichert werden und für die Elektronik dann nicht-sicherheitsrelevant werden.

Einige der hierfür verwendeten Sensoren können für beide Module eingesetzt werden, wie beispielsweise ein Temperaturfühler, der sowohl zur Temperaturregelung als auch zur sicherheitsrelevanten Temperaturüberwachung nutzbar ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

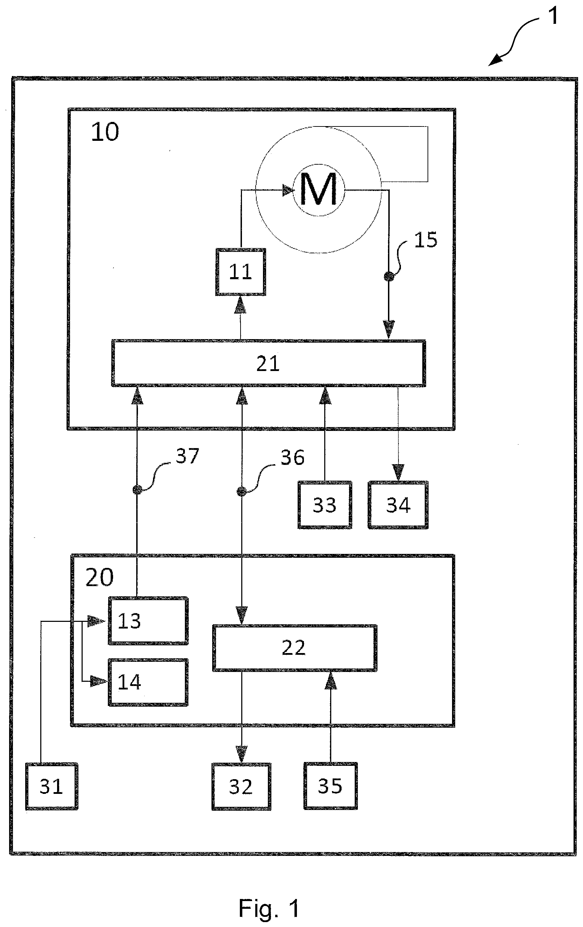

- Fig. 1: einen schematischen modularen Aufbau einer erfindungsgemäßen Gasheizgerätesteuerung.

In Figur 1 ist eine Gasheizgerätesteuerung 1 im modularen Aufbau mit einem ersten Modul 10 und einem getrennten zweiten Modul 20 schematisch dargestellt. Beide Module 10, 20 sind jeweils durch Platinen realisiert, wobei das erste Modul 10 integraler Bestandteil des Verbrennungsluftgebläses ist. Das erste Modul 10 umfasst die Kommutierungselektronik 11 und die als Mikrocontroller ausgebildeten sicherheitsrelevanten Komponenten 21 zur Verarbeitung sicherheitsrelevanter Signale und Steuerung der fehlersicheren Funktionen des Gasheizgeräts. Die Kommutierungselektronik 11 betreibt den Motor M des Verbrennungsluftgebläses, wobei ein Ist-Drehzahlsignal 15 des Motors M an die sicherheitsrelevante Komponenten 21 zur Steuerung der fehlersicheren Funktionen zurückgegeben wird. Schematisch dargestellt sind zudem mit den sicherheitsrelevanten Komponenten 21 verbundene Sensoren 33 für fehlersichere oder nicht-fehlersichere Funktionen, welche beispielsweise als Temperaturfühler und Störungsschalter ausgeführt sind und Signale liefern. Gleichzeitig werden Signale an die fehlersicheren Aktoren 34, beispielsweise ein Gasventil gesendet.

Das zweite Modul 20 umfasst die als Mikrocontroller ausgebildeten nichtsicherheitsrelevanten Komponenten 22 zur Verarbeitung nicht-sicherheitsrelevanter Signale und Steuerung der nicht-fehlersicheren Funktionen sowie eine Stromversorgung 13 und einen Netzfilter 14. Die Stromversorgung 13 ist an einen Stromversorgungsanschluss 31 gekoppelt und liefert den Strom sowohl an das zweite Modul 20 als auch über die Verbindung 37 an das erste Modul 10 und den Motor M. Über die bidirektionale Kommunikationsschnittstelle sind die sicherheitsrelevanten Komponenten 21 und die nicht-sicherheitsrelevanten Komponenten 22 beider Module 10, 20 miteinander verbunden. Auch das zweite Modul 20 ist mit seinen nicht-sicherheitsrelevanten Komponenten 22 mit Sensoren 35 signalverbunden, welche für ausschließlich nicht-fehlersichere Funktionen genutzt werden. Gleichzeitig werden Signale an die nicht-fehlersicheren Aktoren 34, beispielsweise eine Pumpe oder ein Wasserventil gesendet.

Alle im allgemeinen Teil beschriebenen Ausgestaltungen sind in dem Ausführungsbeispiel gemäß Figur 1 ohne Weiteres anwendbar, wie beispielsweise die schwingungsgedämpfte Lagerung der Platine des ersten Moduls 10 im Verbrennungsluftgebläse.

## Patentansprüche

1. Gasheizgerätesteuerung (1) mit einer modular aufgebauten Elektronik für ein Gasheizgerät mit einem Verbrennungsluftgebläse, umfassend mindestens ein erstes und ein getrenntes zweites Modul (10, 20), wobei die Elektronik zumindest eine Kommutierungselektronik (11) für das Verbrennungsluftgebläse, eine Regelungselektronik zur Regelung des Verbrennungsluftgebläses, sicherheitsrelevante Komponenten (21) zur Verarbeitung sicherheitsrelevanter Signale des Gasheizgeräts und nicht-sicherheitsrelevante Komponenten (22) zur Verarbeitung nicht-sicherheitsrelevanter Signale des Gasheizgeräts aufweist, wobei die Kommutierungselektronik (11) und die sicherheitsrelevanten Komponenten (21) auf dem ersten Modul (10) und die Regelungselektronik und die nicht-sicherheitsrelevanten Komponenten (22) auf dem getrennten zweiten Modul (20) angeordnet sind.

2. Gasheizgerätesteuerung nach Anspruch 1, **dadurch gekennzeichnet, dass** das erste Modul (10) einen Mikrocontroller aufweist, der sowohl die Kommutierungselektronik (11) als auch die Verarbeitung der sicherheitsrelevanten Signale des Gasheizgeräts realisiert.

3. Gasheizgerätesteuerung nach Anspruch 1 oder 2, **dadurch gekennzeichnet, dass** das erste Modul (10) in dem Verbrennungsluftgebläse integriert ist.

4. Gasheizgerätesteuerung nach einem der vorigen Ansprüche, **dadurch gekennzeichnet, dass** das erste Modul (10) schwingungsgedämpft in dem Verbrennungsluftgebläse gelagert ist.

5. Gasheizgerätesteuerung nach einem der vorigen Ansprüche, **dadurch gekennzeichnet, dass** das erste und das zweite Modul (10, 20) über eine bidirektionale Kommunikationsschnittstelle miteinander verbunden sind.

6. Gasheizgerätesteuerung nach einem der vorigen Ansprüche, **dadurch gekennzeichnet, dass** eine Stromversorgung für das Verbrennungsluftgebläse, die Kommutierungselektronik (11) und die Regelungselektronik ausschließlich auf dem zweiten Modul (20) vorgesehen ist.

7. Gasheizgerätesteuerung nach einem der vorigen Ansprüche, **dadurch gekennzeichnet, dass** mindestens ein Netzfilter (14) ausschließlich auf dem zweiten Modul (20) vorgesehen ist.

8. Gasheizgerätesteuerung nach einem der vorigen Ansprüche, **dadurch gekennzeichnet, dass** das erste und das zweite Modul (10, 20) jeweils durch eine eigene Platine gebildet sind.

9. Gasheizgerätesteuerung nach einem der vorigen Ansprüche, **dadurch gekennzeichnet, dass** das Verbrennungsluftgebläse und die Elektronik mit Kleinspannung betreibbar sind.

10. Gasheizgerätesteuerung nach einem der vorigen Ansprüche, **dadurch gekennzeichnet, dass** die sicherheitsrelevanten Komponenten (21) zur Verarbeitung sicherheitsrelevanter Signale des Gasheizgeräts zumindest eine Gasventilsteuerung, eine Flammenüberwachung eines Brenners des Gasheizgeräts, eine Temperaturüberwachung und/oder eine Kontrolle der Verbrennungsluft umfassen.

11. Gasheizgerätesteuerung nach einem der vorigen Ansprüche, **dadurch gekennzeichnet, dass** die nicht-sicherheitsrelevanten Komponenten (22) zur Verarbeitung nicht-sicherheitsrelevanter Signale des Gasheizgeräts zumindest eine Temperaturregelung, eine Steuerung eines Wasserventils, eine Steuerung einer Pumpe und/oder eine Anzeige- und Bedienungsvorrichtung umfassen.

## Claims

1. Gas heater control (1) having a modular electronics unit for a gas heater having a combustion air fan, comprising at least one first and one separate second module (10, 20), wherein the electronics unit has at least one commutation electronics unit (11) for the combustion air fan, a control electronics unit for controlling the combustion air fan, safety-relevant components (21) for processing safety-relevant signals from the gas heater and non-safety-relevant components (22) for processing non-safety-relevant signals from the gas heater, wherein the commutation electronics unit (11) and the safety-relevant components (21) are arranged on the first module (10) and the control electronics unit and the non-safety-relevant components (22) are arranged on the separate second module (20).

2. Gas heater control according to Claim 1, **characterized in that** the first module (10) has a microcontroller which implements both the commutation electronics unit (11) and the processing of the safety-relevant signals of the gas heater.

3. Gas heater control according to Claim 1 or 2, **characterized in that** the first module (10) is integrated in the combustion air fan.

4. Gas heater control according to one of the preceding claims, **characterized in that** the first module (10) is mounted in the combustion air fan in a vibration-damped manner.

5. Gas heater control according to one of the preceding claims, **characterized in that** the first and the second module (10, 20) are connected to one another via a bidirectional communication interface.

6. Gas heater control according to one of the preceding claims, **characterized in that** a power supply for the combustion air fan, the commutation electronics unit (11), and the control electronics unit are provided exclusively on the second module (20).

7. Gas heater control according to one of the preceding claims, **characterized in that** at least one mains filter (14) is provided exclusively on the second module (20).

8. Gas heater control according to one of the preceding claims, **characterized in that** the first and the second module (10, 20) are each formed by their own circuit board.

9. Gas heater control according to one of the preceding claims, **characterized in that** the combustion air fan and the electronics unit are operable at low voltage.

10. Gas heater control according to one of the preceding claims, **characterized in that** the safety-relevant components (21) for processing safety-relevant signals from the gas heater comprise at least one gas valve control, a flame monitor of a burner of the gas heater, a temperature monitor, and/or a supervision of the combustion air.

11. Gas heater control according to one of the preceding claims, **characterized in that** the non-safety-relevant components (22) for processing non-safety-relevant signals from the gas heater comprise at least one temperature controller, a control of a water valve, a control of a pump, and/or a display and operating device.

## Revendications

1. Commande d'appareil chauffant (1) avec une électronique modulaire pour un appareil chauffant à gaz avec un ventilateur d'air de combustion, comprenant au moins un premier et un second module séparé (10, 20), dans laquelle l'électronique comporte au moins une électronique de commutation (11) pour le ventilateur d'air de combustion, une électronique de commande pour la commande du ventilateur d'air de combustion, des composants liés à la sécurité (21) pour le traitement des signaux liés à la sécurité de l'appareil chauffant à gaz et des composants non liés à la sécurité (22) pour le traitement des signaux non liés à la sécurité de l'appareil chauffant au gaz, dans laquelle l'électronique de commutation (11) et les composants liés à la sécurité (21) sur le premier module (10) et l'électronique de commande et les composants non liés à la sécurité (22) sont disposés sur le second module séparé (20).

2. Commande d'appareil chauffant selon la revendication 1, **caractérisée en ce que** le premier module (10) comporte un microcontrôleur qui réalise à la fois l'électronique de commutation (11) et le traitement des signaux de sécurité de l'appareil chauffant à gaz.

3. Commande d'appareil chauffant selon la revendication 1 ou 2, **caractérisée en ce que** le premier module (10) est intégré dans le ventilateur d'air de combustion.

4. Commande d'appareil chauffant selon l'une des revendications précédentes, **caractérisée en ce que** le premier module (10) est monté dans le ventilateur d'air de combustion de manière à amortir les vibrations.

5. Commande d'appareil chauffant selon l'une des revendications précédentes, **caractérisée en ce que** le premier et le second module (10, 20) sont reliés entre eux par une interface de communication bidirectionnelle.

6. Commande d'appareil chauffant selon l'une des revendications précédentes, **caractérisée en ce qu'**une alimentation électrique pour le ventilateur d'air de combustion, l'électronique de commutation (11) et l'électronique de commande est prévue exclusivement sur le second module (20).

7. Commande d'appareil chauffant selon l'une des revendications précédentes, **caractérisée en ce qu'**au moins un filtre d'alimentation (14) est prévu exclusivement sur le second module (20).

8. Commande d'appareil chauffant selon l'une des revendications précédentes, **caractérisée en ce que** le premier et le second module (10, 20) sont formés chacun par leur propre carte de circuit imprimé.

9. Commande d'appareil chauffant selon l'une des revendications précédentes, **caractérisée en ce que** le ventilateur d'air de combustion et l'électronique sont exploitables avec une basse tension.

10. Commande d'appareil chauffant selon l'une des revendications précédentes, **caractérisée en ce que** les composants liés à la sécurité (21) pour le traitement des signaux liés à la sécurité de l'appareil chauffant à gaz comprennent au moins une commande de soupape à gaz, une surveillance de flamme d'un brûleur de l'appareil chauffant à gaz, une surveillance de la température et/ou un contrôle de l'air de combustion.

11. Commande d'appareil chauffant selon l'une des revendications précédentes, **caractérisée en ce que** les composants non liés à la sécurité (22) comprennent au moins un régulateur de température, une commande pour une vanne d'eau, une commande pour une pompe et/ou un dispositif d'affichage et de commande pour le traitement de signaux non liés à la sécurité de l'appareil chauffant à gaz.
